# EUROPEAN PATENT APPLICATION

(11) **EP 2 651 019 A2**
(43) Date of publication of application: **16.10.2013**
(21) Application number: 13158580.4
(22) Date of filing: 11.03.2013
(51) Int. Cl.: H02K 33/16

(54) **Vibrator**

(30) Priority: 10.04.2012 JP 2012089502; 20.06.2012 JP 2012139037
(71) Applicant: Hosiden Corporation, Yao-shi, Osaka 581-0071 (JP)
(72) Inventor: Awamura, Ryuji, Fukuoka, Fukuoka 8071312 (JP); Ishihara, Kentaro, Fukuoka, Fukuoka 8071312 (JP); Motonaga, Hidenori, Fukuoka, Fukuoka 8071312 (JP); Nakanishi, Kensuke, Fukuoka, Fukuoka 8071312 (JP)
(74) Representative: Lemcke, Brommer & Partner

(57) **Abstract**

A vibrator B includes a substrate 31, a coil 33 supported to the substrate 31 and a vibrator member 40 disposed in opposition to the coil 33 and capable of vibrating along the axial direction of the coil 33. The vibrator member 40 includes a weight 43, a magnet 42 polarized along the axial direction of the coil 33, and a supporting member 41 for supporting the magnet 42 with allowing displacement thereof along the axial direction of the coil 33.

## Description

### BACKGROUND OF THE INVENTION

### FIELD OF THE INVENTION

The present invention relates to a vibrator configured to convert an electric signal to vibration.

### DESCRIPTION OF THE RELATED ART

In recent years, various instruments employ a vibrator configured to convert an electric signal to vibration. For instance, e.g. a mobile phone is provided with the function of informing a user of an incoming call by means of vibration instead of a sound. A portable game machine or a controller for a game machine often has the function of providing vibration to the player in accordance with an ongoing situation in the game in order to provide enhanced simulated reality in the game playing feel. Also, a vibrator is sometimes incorporated in a touch panel for giving a touched feel to the user when touching the panel.

According to an exemplary arrangement adopted in such vibrator as above, a coil is fixed to a frame and a magnetic circuit unit is elastically supported to the frame via a suspension. A coil is disposed in a magnetic gap forming a part of the magnetic circuit and a weight is provided to the magnetic circuit unit (see Japanese Unexamined Patent Application Publication No. 2003-033724). With this vibrator, the magnetic circuit unit can be vibrated by an attraction force and a repulsion force that are produced between a magnetic field generated by application of an AC current to the coil and a magnetic field of the magnetic circuit unit.

With the vibrator described above, there is a need for precisely determining the positional relationship between the coil and the magnetic circuit unit. However, it would be difficult to increase the positioning precision in fixing the coil to the frame. As an attempt to solve the problem above, there is known a vibrator configured as follows. This known vibrator includes a bawl-shaped yoke, a magnetic circuit unit consisting of a plate-like magnet and a top plate stacked one on the other inside the yoke, a voice coil mounted within a gap (a magnetic gap) formed between the inner peripheral portion of the lateral wall of the yoke and the outer peripheral portion of the top plate of the magnetic circuit unit, a substrate holding the voice coil externally of the magnetic circuit unit, a first suspension having a cylindrical lateral wall portion and forming a plate spring integrally with the bottom of the cylindrical lateral wall portion, a second suspension holding the magnetic circuit unit, a ring-shaped weight fixed to the outer peripheral portion of the yoke, and a protector covering the first suspension; wherein positioning holes are formed respectively in the four components: the substrate, the top plate, the yoke and the first suspension, so that the voice coil is mounted in the vicinity of the center of the magnetic gap with using the positioning holes as reference (see Japanese Unexamined Patent Application Publication No. 2007-184812).

With this vibrator according to the Japanese Unexamined Patent Application Publication No. 2007-184812, the respective components can be assembled to each other with reference to the positioning holes provided in the above-described four components. Hence, it is possible to increase the precision in the positioning of the voice coil.

With the vibrator according to the Japanese Unexamined Patent Application Publication No. 2003-033724, it is difficult to increase the precision in the positioning of the voice coil. On the other hand, with the vibrator according to the Japanese Unexamined Patent Application Publication No. 2007-184812, while it is possible to increase the precision in the positioning of the voice coil, the manufacturing cost of the respective components increases due to the provision of the positioning holes in the respective components. Further, with these vibrators, since the magnetic circuit, the coil, etc. are supported to the inner face of the casing via suspensions, assembly of these components is not easy.

The present invention has been made in view of the above-described problem. The object thereof is to provide a vibrator that can be readily assembled.

### SUMMARY OF THE INVENTION

For fulfilling the above-noted object, a vibrator according to one preferred embodiment of the present invention, comprises:
a substrate;
a coil supported to the substrate; and
a vibrator member disposed in opposition to the coil and capable of vibrating along the axial direction of the coil;
wherein the vibrator member includes a weight, a magnet polarized along the axial direction of the coil, and a supporting member for supporting the magnet with allowing displacement thereof along the axial direction of the coil.

With this arrangement, the coil and the vibrator member are disposed in opposition to each other along the axial direction of the coil (the vibrating direction of the vibrator member) and the magnet constituting the vibrator member is polarized along the axial direction of the coil. Therefore, when an electric current is fed to the coil, at the axial position of the coil, there is generated a magnetic field along this axial direction. For this reason, the magnetic field generated by the coil and the magnetic field of the magnet produce a repulsion/attraction force, which can vibrate the magnet that is displaceably mounted to the supporting member. Further, with this arrangement, the number of constituent components is small, so the assembly is easy.

According to another preferred embodiment of the vibrator of the present invention, the vibrator further comprises a yoke supported to the substrate, and the yoke includes a protruding portion protruding toward the vibrator member and the coil is engaged with the protruding portion from the outside thereof.

With this arrangement, since the coil is engaged outwardly with the protruding portion of the yoke, the positioning of the coil relative to the yoke can be effected easily and more precisely. Further, since the yoke for increasing magnetic force is used as a positioning member, there is no increase in the number of constituent components.

According to still another preferred embodiment of the vibrator of the present invention, the vibrator further comprises a first case that supports the substrate and has a first lateral wall and a second case that supports the vibrator member and has a second lateral wall; and
wherein the first lateral wall of the first case is engaged with the second lateral wall of the second case from the inside or the outside thereof.

With this arrangement, since the first lateral wall of the first case is engaged with the second lateral wall of the second case from the inside or the outside thereof, the assembly of the cases can be effected easily.

According to still another preferred embodiment of the vibrator of the present invention, the vibrator member includes a first ring having a first diameter, a second ring having a second diameter smaller than the first diameter, and a plurality of support arms;
wherein the plurality of support arms are provided between the first ring and the second ring and support the second ring with allowing displacement of the second ring relative to the first ring along the vibrating direction; and
wherein the magnet and the weight are supported to the second ring.

With this arrangement, the magnet and the weight are supported to the second ring which is displaceable relative to the first ring along the vibrating direction. Hence, it is possible to attach the first ring to the case or the like with keeping the magnet and the weight attached the second ring. With this, the assembly is made easier than the arrangement according to the conventional art in which it is supported to the casing via the suspension.

According to still another preferred embodiment of the vibrator of the present invention, the first case has a first bottom plate having the same shape as the substrate and the second case has a second bottom plate having the same shape as the first ring.

With this arrangement, positioning of the substrate relative to the first case and positioning of the vibrator member (supporting member) relative to the second case can be effected easily and with higher precision. Further, with increased precision in these positioning, the positioning precision between the coil and the magnet supported thereto is increased also.

According to still another preferred embodiment of the vibrator of the present invention, the first ring is formed integrally with the second case. With this arrangement, since the first ring is formed integrally with the second case, there is no need to attach the vibrator member to the second case. For this reason, the number of components and the number of assembling steps therefor can be reduced and the positioning precision of the vibrator member can be enhanced. Moreover, the above arrangement contributes also to reduction in the thickness of the case.

### BRIEF DESCRIPTION OF THE DRAWINGS

[Fig. 1] is an exploded perspective view showing a vibrator according Embodiment 1 of the present invention,
[Fig. 2] is a section view showing the vibrator according Embodiment 1 of the present invention, and
[Fig. 3] is an exploded perspective view showing a vibrator according Embodiment 2 of the present invention.

### DETAILED DESCRIPTION OF THE PREFERRED EMBODIMENTS

### [Embodiment 1]

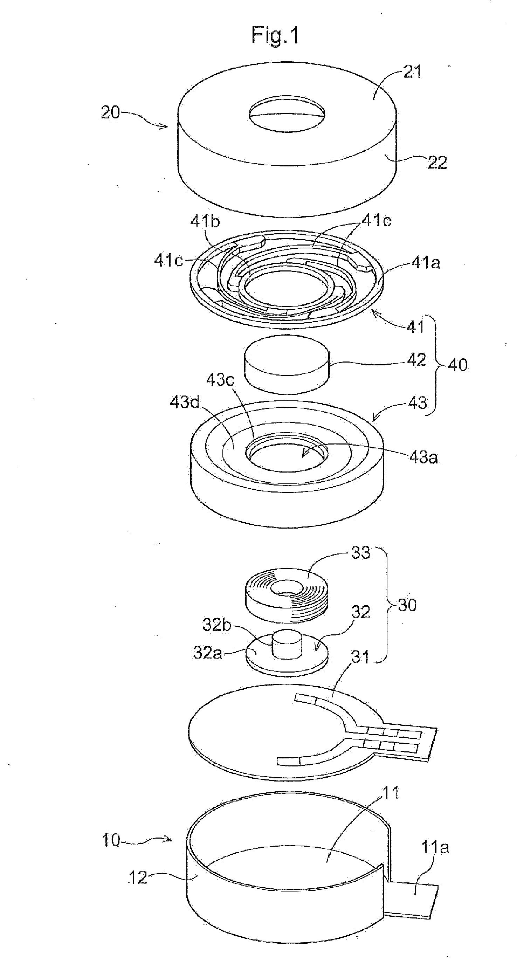

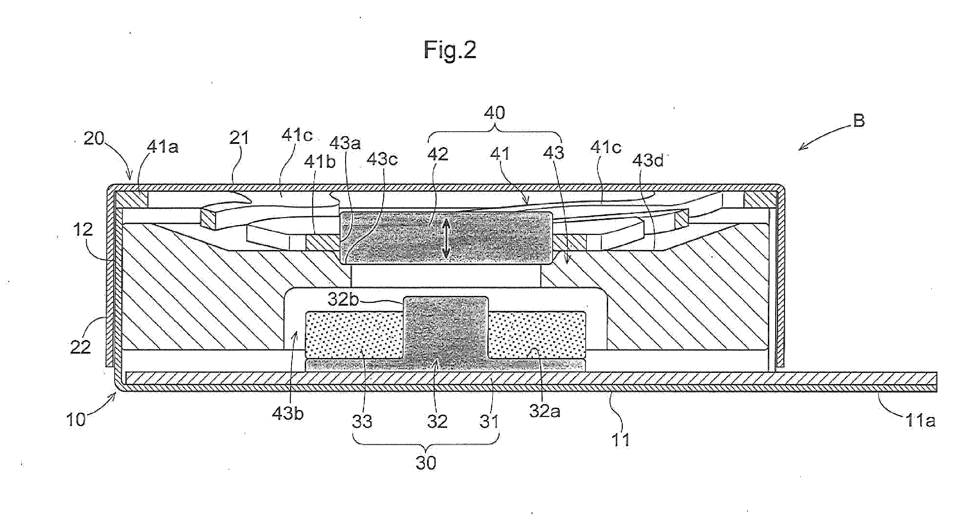

Next, an embodiment of the vibrator according to the present invention will be described. Figs. 1 and 2 are an exploded perspective view and a section view showing the vibrator according to the instant embodiment. As shown in these figures, in the vibrator B, an electromagnetic circuit 30 and a vibrator member 40 are accommodated inside a casing consisting of a first case 10 and a second case 20.

### [Casing]

The first case 10 includes a disc-shaped first bottom plate 11 and a first lateral wall 12 extending vertically from the first bottom plate 11. In the instant embodiment, the first lateral wall 12 does not extend continuously along the entire perimeter of the first bottom plate 11, but has an opening at a portion thereof; and through this opening, an extension portion 11a extends from the first bottom plate 11.

On the other hand, the second case 20 includes a disc-like second bottom plate 21 having a slightly greater diameter than the diameter of the first bottom plate 11 of the first case 11 and a second lateral wall 22 extending vertically from the second bottom plate 21. And, the second lateral wall 22 of the second case 20 extends along the entire perimeter of the second bottom plate 21. In the following discussion, the side of the first case 10 will be referred to as the "lower side" and the side of the second case 20 will be referred to as the "upper side", respectively.

As described above, since the diameter of the second bottom plate 21 of the second case 20 is formed slightly greater than the diameter of the first bottom plate 11 of the first case 10, when the first case 10 and the second case 20 are engaged with each other, the second lateral wall 22 of the second case 20 is engaged with the first lateral wall 12 of the first case 10 from the outer side thereof. More particularly, the outer face of the first lateral wall 12 of the first case 10 will be brought near or almost in contact with the inner face of the second lateral wall 22 of the second case 20, so that these together function as "a positioning member". With this, the assembly of the case is facilitated.

### [Electromagnetic Circuit]

The electromagnetic circuit 30 includes a substrate 31, a yoke 32 supported to the substrate 31, and a coil 33 supported to the substrate 31 via the yoke 32. On the substrate 31, there is formed a circuit to which electric signals are transmitted from an electronic instrument or the like in which this vibrator B is to be incorporated.

The yoke 32, which is formed of a magnetic member of iron, permalloy or the like, includes a disc-shaped bottom portion 32a and a column-shaped protruding portion 32b protruding upwardly from the bottom portion 32a. The bottom portion 32a of the yoke 32 is fixed to the substrate 31 by means of an adhesive or the like.

The coil 33 is formed of a conductive wire member and connected to the circuit on the substrate 31. In the instant embodiment, the coil 33 is configured such that its inner diameter is substantially same as the diameter of the protruding portion 32b of the yoke 32. And, the coil 33 is mounted to be fitted on/through the protruding portion 32b of the yoke 32. With this arrangement, positioning of the coil 33 relative to the yoke 32 and the substrate 31 is made possible, only with attaching of the coil 33 to the yoke 32. Further, in this embodiment, an arrangement is made such that when the coil 33 is attached to the yoke 32, the upper end of the protruding portion 32b of the yoke 32 protrudes from the coil 33.

In the instant embodiment, the substrate 31 is attached to the inner face (upper face) of the first bottom plate 11 of the first case 10. Further, the shape of the substrate 31 is rendered same as the shape of the first bottom plate 11 of the first case 10 (more strictly, the shape of the portion of the first bottom plate 11 on the inner side of the first lateral wall 12). Therefore, when the substrate 31 is to be attached to the first case 10, upon placing of the substrate 31 on the first bottom plate 11, the peripheral face of the substrate 31 will come into contact with the inner face of the first lateral wall 12, whereby the substrate 31 can be fixed in position. Accordingly, together with the above-described arrangement, the positioning of the coil 33 relative to the first case 10 can be effected easily and with higher precision.

### [Vibrator Member]

The vibrator member 40 includes a supporting member 41, a magnet 42 and a weight 43 supported to the supporting member 41. The supporting member 41 includes a first ring 41a having a first diameter, a second ring 41b having a second diameter smaller than the first diameter, and a plurality of support arms 41c for elastically supporting the second ring 41b relative to the first ring 41a. With these support arms 41c, the second ring 41b is supported to be vertically displaceable relative to the first ring 41a. That is, the second ring 41b is vertically vibratable relative to the first ring 41a.

The magnet 42 is formed like a thick disc and is polarized along the vertical direction, that is, the vibrating direction. The weight 43 has a doughnut-like shape forming an opening 43a at the center thereof. As shown in Fig. 2, on the lower side of the weight 43, there is formed a recessed portion 43b in which the yoke 32 and the coil 33 can be engaged. Further, on the upper side of the weight 43, there is formed a magnet supporting portion 43c around the opening 43 for supporting the magnet 42. Further, at an intermediate portion in the radial direction of the upper face of the weight 43, there is formed an annular recessed portion 43d along the circumferential direction.

The magnet 42 is attached to the inner face of the second ring 41b and the magnet supporting portion 43c of the weight 43. On the other hand, the weight 43 is attached to the lower face of the second ring 41b.

In the instant embodiment, the shape of the first ring 41a is set same as the shape of the second bottom plate 21 of the second case 20 (more strictly, the shape of the portion of the second bottom plate 21 on the inner side of the second lateral wall 22). Therefore, when the supporting member 41 is attached to the second case 20, the outer face of the first ring 41a of the supporting member 41 comes into contact with the inner wall of the second lateral wall 22 of the second case 22, whereby the supporting member 41 is fixed in position relative to the second case 20. Further, as described above, since the magnet 42 and the weight 43 are attached to the supporting member 41, these members too are fixed in position relative to the second case 20.

### [Assembling Method]

Next, an assembling method of the vibrator B of this embodiment will be described. Firstly, the yoke 32 is attached to the center of the substrate 31 by means of an adhesive or the like. Next, the coil 33 is fitted over and around the protruding portion 32b of the yoke 32 and the lower face of the coil 33 is attached to the upper face of the bottom portion 32a of the yoke 32 by means of an adhesive or the like. Then, the substrate 31 to which the yoke 32 and the coil 33 have been attached is attached to the first case 10 by means of an adhesive or the like. In this, as described hereinbefore, the shape of the substrate 31 is designed to be confined within the interior of the first case 10, the electromagnetic circuit (the substrate 31, the yoke 32, the coil 33) can be fixed in position relative to the first case 10 easy and precisely.

On the other hand, in assembling the vibrator member 40, firstly, the outer peripheral face of the magnet 42 is fixed to the inner face of the second ring 41b of the supporting member 41 by means of an adhesive. In this, appropriate care will be taken such that the lower face of the magnet 42 may be positioned downwardly of the lower face of the second ring 41b. Then, the supporting member 41 will be placed on the weight 43 such that the lower face of the magnet 42 may contact the magnet supporting portion 43c of the weight 43. And, the lower face of the second ring 41b of the supporting member 41 and the upper face of the weight 43 will be laser-welded to each other. Incidentally, the magnet 42 may be fixed to the weight 43 with an adhesive or the like. With the vibrator member 40 assembled in the manner described above, the upper face of the first ring 41a of the supporting member 41 is disposed in contact with the lower face of the second bottom plate 21 of the second case 20 and the upper face of the first ring 41a and the lower face of the second bottom plate 21 are laser-welded to each other. In this, since the shape of the first ring 41a is designed to be confined within the interior of the second case 20 as described above, the vibrator member (the supporting member 41, the magnet 42, the weight 43) can be fixed in position relative to the second case 20 easily and precisely.

As described above, the vibrator B can be assembled by engaging the assembled second case 20 with the first case 10 from the outer side thereof. In this, since the second lateral wall 22 of the second case 20 is arranged to be engaged with the first lateral wall 12 of the first case 10 from the outer side thereof, the positioning operations of the first case 10 and the second case 20 can be effected easily and precisely. Therefore, the positional relationship between the electromagnetic circuit 30 and the vibrator member 40 can be maintained precisely as well.

### [Operating Method]

The vibrator B according to this embodiment is driven by AC current. Firstly, when a current is fed to the coil 33 in the direction for generating a magnetic field along the direction for generating a force of attraction to the magnet 42. With this force of attraction, the magnet 42, that is, the vibrator member 40, will be displaced downwards. Next, when a current is fed to the coil 33 in the direction for generating a magnetic field along the direction for generating a force of repulsion to the magnet 42. With this force of repulsion, the magnet 42, that is, the vibrator member 40, will be displaced upwards. With repetition of the above cycle, the magnet 42, i.e. the vibrator member 40, can be vibrated along the vertical direction. Incidentally, by changing the intensity of the current, it is possible to vary the amplitude of the vibration. Further, by changing the frequency of the AC current, it is possible to control the frequency of the vibration.

### [Embodiment 2]

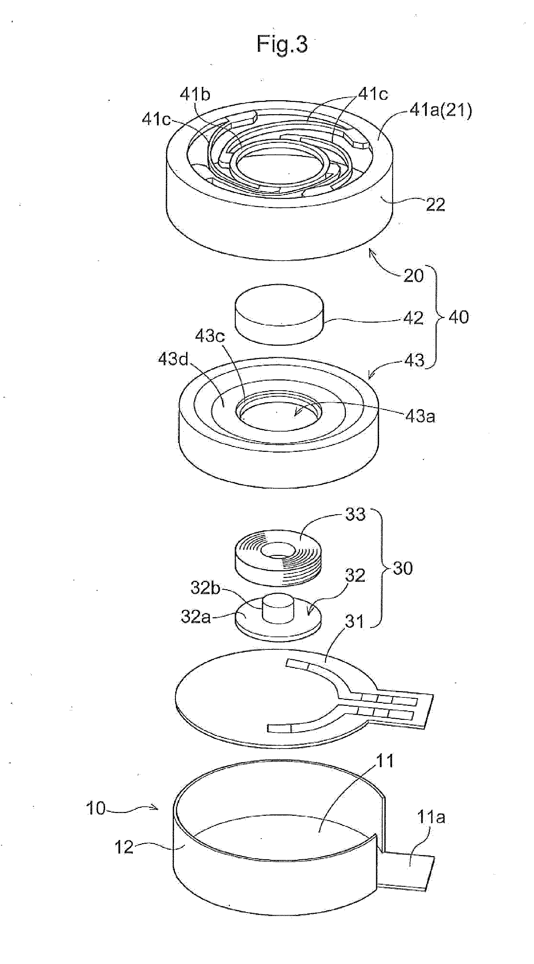

Fig. 3 is an exploded perspective view showing a vibrator according to this further embodiment. The vibrator according to this embodiment differs from that of Embodiment 1 in that the second case 20 and the supporting member 41 are formed integral with each other. In the following discussion, the same components as those in Embodiment 1 will be denoted with same reference marks/numerals and detailed explanation thereof will be omitted.

As shown in the figure, the second bottom plate 21 of the second case 20 in this embodiment defines a circular opening. And, the support arms 41c of the supporting member 41 are integrally attached to the inner peripheral edge of the second bottom plate 21. That is, in the instant embodiment, the second bottom plate 21 constitutes the first ring 41a of the supporting member 41 and this first ring 41a is formed integrally with the second case 20.

In this way, as the first ring 41a of the supporting member 41 is formed integral with the second case 20, it is possible to reduce the number of the components and the number of assembly steps of the entire vibrator. Further, now that the arrangement has eliminated the need for attaching the supporting member 41 to the second case 20, the positioning precision of the supporting member 41 relative to the second case 20 can be increased. Furthermore, in comparison with Embodiment 1, the thickness of the second case 20 can be made smaller.

### [Other Embodiments]

(1) In the foregoing embodiment, the casing has an approximately cylindrical shape. But, this may have any other shape.
(2) In the foregoing embodiment, the second lateral wall 22 of the second case 20 is engaged with the first lateral wall 12 of the first case 10 from the outer side thereof. Instead, the second lateral wall 22 of the second case 20 may be engaged with the first lateral wall 12 of the first case 10 from the inner side thereof.
(3) In the foregoing embodiment, the vibrator B is driven by an
   AC current. Instead, the vibrator B may be configured to be driven by ON/OFF switching of a direct current. In this case, to the coil 33, there will be applied a direct current along the direction for generating a magnetic field along the direction for generating a repulsion force to the magnet 42.

## Claims

1. A vibrator (B),
**characterized in that**
the vibrator (B) includes:
a substrate (31))
a coil (33) supported to the substrate (31); and
a vibrator member (40) disposed in opposition to the coil (33) and capable of vibrating along the axial direction of the coil;
wherein the vibrator member (40) includes a weight (43), a magnet (42) polarized along the axial direction of the coil (33), and a supporting member (41) for supporting the magnet (42) with allowing displacement thereof along the axial direction of the coil (33).

2. A vibrator (B) according to claim 1,
**characterized by**
a yoke (32) supported to the substrate (31), and
wherein the yoke (32) includes a protruding portion (32b) protruding toward the vibrator member (40) and the coil (33) is engaged with the protruding portion (32b) from the outer side thereof.

3. A vibrator (B) according to claim 1 or 2,
**characterized by**
a first case (10) that supports the substrate (31) and has a first lateral wall (12); and
a second case (20) that supports the vibrator member (40) and has a second lateral wall (22); and
wherein the first lateral wall (12) of the first case (10) is engaged with the second lateral wall (22) of the second case (20) from the inner side or the outer side thereof.

4. A vibrator (B) according to claim 3, **characterized in that** the vibrator member (40) includes a first ring (41a) having a first diameter, a second ring (41b) having a second diameter smaller than the first diameter, and a plurality of support arms (41c);
wherein the plurality of support arms (41c) are provided between the first ring (41a) and the second ring (41b) and support the second ring (41b) with allowing displacement of the second ring (41b) relative to the first ring (41a) along the vibrating direction; and
wherein the magnet (42) and the weight (43) are supported to the second ring (41b).

5. A vibrator (B) according to claim 4, **characterized in that** the first case (10) has a first bottom plate (11) having the same shape as the substrate (31); and
the second case (20) has a second bottom plate (21) having the same shape as the first ring (41a).

6. A vibrator (B) according to claim 4, **characterized in that** the first ring (41a) is formed integrally with the second case (20).
